# DEMANDE DE BREVET EUROPEEN

(11) **EP 1 492 029 A1**
(43) Date de publication de la demande: **29.12.2004**
(21) Numéro de dépôt: 04076824.4
(22) Date de dépôt: 22.06.2004
(51) Int. Cl.: G06F 17/30

(54) **Procédé et dispositif de traitement d'informations ayant fait l'objet d'une réception antérieure dans un réseau de télécommunication tel que le réseau Internet**

(30) Priorité: 23.06.2003 FR 0307543
(71) Demandeur: FRANCE TELECOM, 75015 Paris (FR)
(72) Inventeur: Lancieri, Luigi, 14210 Evrecy (FR)
(74) Mandataire: Maillet, Alain

(57) **Abrégé**

La présente invention concerne un procédé de traitement d'informations dans un système de télécommunication comportant un dispositif déterminant des centres d'intérêts des utilisateurs qui lui sont associés, le dispositif mémorisant les informations en rapport avec les centres d'intérêts déterminés, les informations ayant antérieurement été reçues par un utilisateur associé au dispositif, caractérisé en ce que le système de télécommunication comporte au moins un autre dispositif déterminant des centres d'intérêts des utilisateurs qui lui sont associés, l'autre dispositif mémorisant les informations en rapport avec les centres d'intérêts déterminés, et en ce que des informations susceptibles d'être en rapport avec les centres d'intérêts d'au moins un autre dispositif sont transférées entre les dispositifs. L'invention concerne aussi le dispositif de traitement associé.

## Description

La présente invention concerne un procédé et un dispositif de réutilisation d'information antérieurement reçue par un élément destinataire au sein d'un réseau de télécommunication, notamment le réseau Internet. Par élément destinataire, on entend un élément local du réseau de télécommunication par l'intermédiaire duquel des utilisateurs peuvent accéder à de l'information contenue sur le réseau de télécommunication. Par exemple, lorsque le réseau de télécommunication est le réseau Internet, il peut s'agir d'un réseau informatique local hébergeant un site d'entreprise.

Dans un réseau de télécommunication comme le réseau Internet, de l'information est disponible au niveau de sites répartis sur le réseau et est accessible à partir d'un point d'accès quelconque comme un terminal utilisateur. Un système d'information réparti comme le World Wide Web met à la disposition des utilisateurs un ensemble distribué de documents multimédias composites reliés entre eux par des liens hypertextes. Les sites et les documents Web, identifiés par des adresses appelées URL (pour Uniform Resource Locator), sont accessibles et visualisables grâce à des logiciels appelés navigateurs. D'autres systèmes d'information existent. De manière générale, on désignera par le terme objet un ensemble de données formant un contenu individuel visé par l'utilisateur. Un objet pourra être constitué de fichiers tels que des pages HTML (pour Hypertext Mark-up Language), des images, des sons, des séquences vidéo télédiffusées, etc. On désignera par le terme lien le moyen d'accès à un objet. Il pourra s'agir, par exemple, d'un lien hypertexte.

Un type courant d'accès à l'information se fait par le biais d'un serveur. Une fonction d'un serveur est de délivrer, à la requête d'un utilisateur, une information effectivement contenue dans un ensemble d'informations auquel il est associé. Le serveur permet à un utilisateur d'accéder à de l'information contenue par exemple dans un réseau local distant. Par exemple, un serveur Web reçoit une requête HTTP d'accès à un objet émise par le terminal utilisateur et transmet en retour l'objet demandé sous forme de message. Le terme HTTP (pour Hyper Text Transfer Protocol) désigne un protocole d'accès bien connu à une adresse URL du Web.

Un premier problème à résoudre dans ce domaine technique concerne la rapidité d'accès aux données. Sur le réseau Internet, la transmission de messages est confrontée à des problèmes de volume de trafic limitant le débit de transmission de données et augmentant les temps d'attente.

Une solution pour réduire ce problème consiste à utiliser, afin d'assister les serveurs d'origine gestionnaires des objets dont ils assurent la diffusion, des caches implantés dans des serveurs dits de procuration ou proxies. On désignera ce type de dispositif, bien connu, par le terme proxy cache. Sur requête HTTP d'accès à un objet par un terminal utilisateur, un proxy cache associé peut renvoyer directement l'objet s'il est contenu dans le cache du fait d'une requête antérieure identique. Sinon, un message de requête HTTP est envoyé du proxy cache vers le serveur d'origine hébergeant l'URL pour transmission de l'objet à l'utilisateur. Au passage, le proxy cache effectue indexation et stockage de l'objet. Un des avantages du cache est de rapprocher une information de l'utilisateur. L'utilisation d'un proxy cache se traduit par un gain en temps de réponse, et éventuellement en coût si le transfert en provenance du serveur original a un certain coût.

Une autre solution au problème de la rapidité d'accès aux données consiste à reproduire le contenu du serveur d'origine sur d'autres serveurs appelés miroirs. Est ainsi évitée une concentration de connexions sur le serveur d'origine.

Un autre problème à résoudre dans ce domaine technique concerne la sélectivité de l'accès aux données, impliquant une assistance automatique à l'utilisateur permettant d'affiner sa recherche d'information.

Les moteurs de recherche sont des dispositifs bien connus permettant à un utilisateur de rechercher de l'information localisée sur le Web. Ils fournissent à un utilisateur des pointeurs vers ces contenus.

Les différents dispositifs et procédés qui viennent d'être évoqués n'offrent pas, individuellement, de solution aux deux problèmes de la rapidité d'accès aux données et de la sélectivité de l'accès à ces données et présentent en outre d'autres problèmes.

Le cache ne garde les objets qu'un temps déterminé, contrôlé par un algorithme fonction, par exemple, de la date d'entrée, de la taille, de l'historique d'accès. Souvent, les caches sont configurés pour ne stocker que les objets de taille pas trop importante. Par principe, si un objet n'est pas redemandé rapidement, il est éliminé du cache pour faire place à des objets plus récents. Dans l'exemple d'un proxy cache associé à un site d'entreprise, la durée de vie moyenne d'un document n'est que de quelques jours sauf s'il est très souvent demandé. Le cache est un composant au comportement probabiliste et, en conséquence, il est difficile de maîtriser la nature et la durée de vie de son contenu.

Contrairement aux caches, le contenu des miroirs est déterminé. L'administrateur doit prendre l'initiative de la copie d'information, ce qui fait qu'il maîtrise tous les paramètres liés au contenu, comme la durée de vie, la quantité copiée, la localisation etc. La gestion des sites miroirs est souvent de type systématique. Elle implique généralement des organisations identiques des contenus. Autrement dit, un tel système ne dispose d'aucune autonomie en ce qui concerne la constitution du contenu accessible par l'utilisateur final.

Les moteurs de recherche ne font que fournir des pointeurs vers une information. Ils imposent donc une connexion au serveur d'origine pour récupérer l'information.

Un système connu, le CDN (pour content delivery network), est une version améliorée des miroirs dont il pallie un certain nombre de lacunes. Il se fonde sur une architecture distribuée de composants de stockage comme des miroirs ou des caches. Il vise à combiner certains avantages des caches et des miroirs. La copie de l'information depuis le serveur d'origine sur les composants de stockage peut se faire avec une certaine autonomie. En revanche, cette autonomie n'existe pas dans la constitution du contenu : le système de CDN ne fait que répliquer l'organisation et les contenus des serveurs d'origine.

Dans la demande de brevet d'invention FR 2 815 435, sont décrits un dispositif et un procédé de réutilisation d'informations antérieurement reçues par un utilisateur. Dans cette demande, les informations qui satisfont à des critères prédéterminés sont copiées et stockées avec une indexation appropriée dans un moyen de mémorisation associé à un serveur. Les critères prédéterminés sont entre autres la cohérence de ces objets avec des centres d'intérêts associés à des utilisateurs reliés au serveur selon l'invention. Cette cohérence est mesurée à partir du nombre de fois où un objet donné a été demandé sur le réseau par l'ensemble des utilisateurs reliés au serveur. Ces informations sont éliminées au bout d'un certain temps si elles n'ont pas été accédées par un utilisateur ou si elles sont éloignées des centres d'intérêts des utilisateurs.

La solution proposée dans cette demande est particulièrement intéressante lorsque qu'un nombre important d'utilisateurs reliés au serveur ont des centres d'intérêts communs dits majoritaires. Par contre, si quelques utilisateurs seulement ont un centre d'intérêt commun, ce centre d'intérêt dit minoritaire sera considéré comme éloigné des centres d'intérêts de la majorité des utilisateurs et les informations associées à ce centre d'intérêt seront alors éliminées au bout d'un certain temps ainsi que tous les résultats de l'analyse effectuée sur ce centre d'intérêt.

En augmentant le nombre d'utilisateurs reliés au serveur, on augmente aussi le nombre de centres d'intérêts et on amplifie ainsi le problème lié aux centres d'intérêts minoritaires.

La présente invention a comme objectif de proposer un système, venant s'ajouter à l'éventail des solutions existantes pour améliorer la rapidité et la sélectivité d'accès aux données sur un réseau de télécommunication, qui permettrait de surmonter les problèmes précédemment évoqués.

A cet effet, elle propose un procédé de traitement d'informations reçues antérieurement par un utilisateur dans un système de télécommunication comportant un dispositif comportant des centres d'intérêts des utilisateurs qui lui sont associés, le dispositif mémorisant de l'information constitutive d'objets en rapport avec les centres d'intérêts des utilisateurs qui lui sont associés, caractérisé en ce que le système de télécommunication comporte au moins un autre dispositif comportant des centres d'intérêts des utilisateurs qui lui sont associés, l'autre dispositif mémorisant de l'information constitutive d'objets en rapport avec les centres d'intérêts des utilisateurs qui lui sont associés et en ce que des objets susceptibles d'être en rapport avec les centres d'intérêts d'au moins un autre dispositif sont transférés entre les dispositifs.

Ainsi, les informations mémorisées et reçues antérieurement par au moins un utilisateur sont transférées vers d'autres dispositifs et sont alors accessibles rapidement à d'autres utilisateurs.

Plus précisément, préalablement au transfert des objets, on obtient des informations représentatives des centres d'intérêts d'au moins un autre dispositif et on détermine, parmi les objets mémorisés dans le dispositif, des objets susceptibles d'être en rapport avec les centres d'intérêts d'au moins un autre dispositif.

Ainsi, la quantité d'informations transitant sur le réseau de télécommunication est réduite. Les objets transférés correspondent à un centre d'intérêt de l'autre dispositif.

Avantageusement, on gère les contenus mémorisés pour déterminer des objets remarquables et les objets remarquables susceptibles d'être en rapport avec les centres d'intérêts d'au moins un autre dispositif sont transférés.

Plus précisément, un objet remarquable est un objet devant être effacé de la mémoire du dispositif ou est un objet beaucoup accédé donc particulièrement intéressant. Ainsi, avant d'effacer les objets, on s'assure que ceux-ci ne sont pas susceptibles d'être en rapport avec les centres d'intérêts des autres dispositifs. Une information qui n'est plus utilisée dans un dispositif peut toujours être utilisée dans un autre dispositif. Les centres d'intérêts étant dynamiques, ils sont susceptibles de varier dans le temps. Un dispositif selon l'invention peut avoir un centre d'intérêt dominant pendant un certain temps et voir l'intérêt des utilisateurs associés diminuer. Les objets correspondant à ce centre d'intérêt peuvent néanmoins être intéressants pour d'autres dispositifs dont les utilisateurs ont de l'intérêt pour ce centre d'intérêt.

Si un objet est beaucoup accédé, donc particulièrement intéressant, il est aussi probable que cet objet soit aussi intéressant pour les utilisateurs d'autres dispositifs et l'on peut ainsi faire bénéficier ces utilisateurs de cet objet.

Avantageusement, si les objets transférés sont en rapport avec un centre d'intérêt de l'autre dispositif, l'autre dispositif mémorise les informations transférées.

Ainsi, l'autre dispositif en vérifiant si les objets sont en rapport avec un de ses centres d'intérêts ne mémorise que les objets intéressants pour les utilisateurs lui étant associé.

De plus, un dispositif peut déterminer les objets susceptibles d'être en rapport avec un autre dispositif à partir d'informations représentatives de centres d'intérêts d'ordre général d'un autre dispositif et transférer des objets en rapport avec ces centres d'intérêts d'ordre général à l'autre dispositif. L'autre dispositif traite les objets transférés à partir d'informations représentatives de centres d'intérêts plus précises. La détermination de la pertinence des objets est alors effectuée successivement par les dispositifs.

Avantageusement, on détermine des centres d'intérêts et on notifie entre autres des informations représentatives des centres d'intérêts déterminés aux utilisateurs du dispositif.

De plus, on notifie à au moins un utilisateur des informations sur les autres utilisateurs ayant un centre d'intérêt commun avec ledit utilisateur.

Ainsi, les utilisateurs sont informés de l'existence d'autres utilisateurs ayant les mêmes centres d'intérêts qu'eux. Ils peuvent alors par la suite communiquer entre eux et s'échanger des informations sur ces centres d'intérêts.

Plus précisément, on transfère en même temps que chaque objet des éléments formant un contexte dans lequel est pris ledit objet et/ou des éléments décrivant l'objet par une analyse de son contenu.

Corrélativement, l'invention propose un dispositif de réplication autonome destiné à être associé à un proxy cache et un serveur Web pour exécuter un procédé de traitement d'informations antérieurement reçues par au moins un utilisateur au sein du réseau Internet selon le procédé tel que précédemment décrit, ledit dispositif étant caractérisé en ce qu'il comprend un étage d'analyse d'opportunité, un étage de reconstitution associative, un étage de génération de contenu, un étage de gestion de contenu, un module de communication et un module de gestion des interactions homme machine.

L'invention concerne aussi un dispositif pour exécuter un procédé de traitement d'informations antérieurement reçues par un utilisateur au sein du réseau Internet selon le procédé tel que précédemment décrit, le dispositif comprenant un proxy cache, un serveur Web et un système de réplication autonome.

L'invention concerne aussi le programme d'ordinateur stocké sur un support d'informations, ledit programme comportant des instructions permettant de mettre en oeuvre le procédé de datation et/ou le procédé de traitement précédemment décrit, lorsqu'il est chargé et exécuté par un système informatique.

Les caractéristiques de l'invention mentionnées ci-dessus, ainsi que d'autres apparaîtront plus clairement à la lecture de la description suivante d'un exemple de réalisation, ladite description étant faite en relation avec la Fig. unique représentant un organigramme montrant de manière schématique le fonctionnement d'un dispositif selon la présente invention et appliquant un procédé selon la présente invention.

En référence à la Fig. unique, deux dispositifs la et 1b de traitement d'informations selon un exemple de réalisation de la présente invention s'appliquent à deux sites Web, par exemple deux sites d'entreprises, désignés dans ce qui suit par le terme sites destinataires comprenant chacun une pluralité d'utilisateurs. Bien entendu, l'invention pourrait s'adapter également à tout autre contexte d'accès à Internet, par exemple un accès par le biais de fournisseurs de services Internet (ISP).

Le dispositif 1b étant identique au dispositif 1a, seul le dispositif 1a sera décrit en détail.

A chaque site destinataire, est associé de manière classique un dispositif de médiation et de mémorisation 10a. Ce dispositif de médiation et de mémorisation est par exemple un proxy cache 10a. Il pourra par exemple s'agir d'un proxy cache de type Squid appartenant au domaine public. Le proxy cache 10a comprend un disque de stockage 11a. Son fonctionnement est assuré par une unité de commande 13a. Sont également associés au proxy cache 10a des fichiers de trace informatique ou fichiers de Log 12a. Classiquement, sur requête HTTP d'accès à un objet à partir du site destinataire, le proxy cache 10a peut renvoyer directement l'objet s'il est contenu dans le cache du fait d'une requête antérieure identique. Sinon, un message de requête HTTP est envoyé du proxy cache 10a vers le serveur d'origine hébergeant l'URL pour transmission de l'objet à l'utilisateur. Au passage, le proxy cache 10a effectue une indexation et un stockage de l'objet. Le stockage des objets dans le disque 11a est un stockage temporaire. Chaque objet n'est stocké que pour un temps déterminé, contrôlé par un algorithme fonction, par exemple, de la date d'entrée et de la taille de l'objet.

Le contenu du proxy cache 10a est analysé pour détecter la présence d'objets lourds, et, le cas échéant, déterminer les caractéristiques de ces objets afin d'évaluer l'opportunité de les copier sur un moyen de gestion d'objets 30a. Par objets lourds on entend des objets ayant une taille supérieure à une taille limite prédéterminée, par exemple 100 ko. L'analyse est faite régulièrement, à intervalle fonction de la durée de vie moyenne des objets sur le proxy cache 10a, afin que soient copiés dans le moyen de gestion d'objets 30a tous les objets satisfaisant les critères d'opportunité.

A cet effet, le dispositif de réutilisation de l'information la comprend, outre le proxy cache 10a, un système de réplication autonome 20a et un serveur Web HTTP 30a.

Le moyen de gestion d'objets est plus précisément un serveur Web 30a. Le serveur Web 30a est un serveur de type classique, par exemple de type Apache appartenant au domaine public, local au site destinataire. Un tel serveur comprend un disque de stockage 31a et une unité de commande 33a. Un tel serveur est accessible via un navigateur standard. Le contenu de ce serveur Web, ainsi qu'il apparaîtra mieux par la suite, est constitué de pages 32a automatiquement générées par le système ainsi que par des objets lourds recopiés depuis le cache sur un disque 31a.

Le système de réplication autonome 20a, implanté sur le site destinataire, comprend quatre étages, un étage d'analyse d'opportunité 21a, un étage de reconstitution associative 22a, un étage de génération de contenu 23a, un étage gestionnaire de contenu 24a. Le système de réplication autonome 20a comprend aussi un module de gestion des interactions homme machine 25a et un module de communication 26a avec d'autres systèmes de réplication autonomes 20b.

L'étage d'analyse d'opportunité 21a a pour fonction d'analyser l'opportunité d'effectuer une copie d'un objet contenu dans le disque 11a associé au proxy cache 10a vers le disque 31a associé au serveur Web 30a. Pour ce faire, sont employés des critères d'opportunité. Ces critères s'appliquent après recoupement entre fichiers de Log de manière à ne prendre en compte que les objets effectivement présents dans le cache.

Un premier critère d'opportunité appliqué est celui lié à la taille de l'objet. Seuls les objets de grande taille, par exemple supérieure à 100 ko, sont copiés.

Un second critère d'opportunité appliqué est celui lié à la réutilisabilité de l'objet. Les objets peu autonomes ou difficilement réutilisables en l'état, comme les fichiers « .c1a » ne sont pas copiés. On ne copie donc que des objets de type classique comme les fichiers « .mp3 », « .mpg », « .doc », « .avi », « .jpg », etc.

Un troisième critère d'opportunité appliqué est celui lié à la cohérence avec les centres d'intérêt des utilisateurs du site destinataire. Cette cohérence peut tout d'abord être mesurée à partir du nombre de fois où un objet donné a été demandé sur le réseau, ce nombre étant révélé par l'analyse des fichiers de Log 12a. Ensuite, cette cohérence peut être mesurée à partir du niveau de proximité thématique d'un objet donné par rapport aux accès globaux et par rapport aux accès au serveur Web 30a. Les niveaux de proximité thématique sont mesurés de manière connue grâce à un moteur d'analyse sémantique.

L'étage d'analyse d'opportunité 21a a aussi pour fonction d'analyser l'opportunité d'effectuer une copie d'un objet éventuellement reçu d'un autre système de réplication autonome 20b vers le disque 31a associé au serveur Web 30a.

L'étage d'analyse d'opportunité 21a a aussi pour fonction d'analyser l'opportunité d'effectuer un transfert d'un objet contenu dans le disque 31a vers un autre système de réplication autonome 20 dont les centres d'intérêts sont cohérents avec l'objet considéré. L'analyse de l'opportunité d'effectuer un transfert est liée à la cohérence d'un objet avec les centres d'intérêts des utilisateurs du site destinataire du système de réplication 20a. Par exemple, l'étage d'analyse d'opportunité 21a obtient périodiquement des objets mémorisés dans le disque 31a associé au serveur Web 30a et analyse la cohérence de ces objets avec les centres d'intérêts des utilisateurs des autres systèmes de réplication, en l'occurrence le système 20b.

L'étage d'analyse d'opportunité 21a a aussi, selon une variante de l'invention, pour fonction d'analyser l'opportunité d'effectuer un transfert d'un objet contenu dans le disque 11a associé au proxy cache 10a vers le système de réplication autonome 20b.

Dans cette variante, l'analyse de l'opportunité d'effectuer un transfert est liée à la cohérence d'un objet avec les centres d'intérêts des utilisateurs des sites destinataires des autres systèmes de réplication, en l'occurrence le système 20b. Par exemple, l'étage d'analyse d'opportunité obtient périodiquement des objets mémorisés dans le disque 11a et analyse la cohérence de ces objets avec les centres d'intérêts des utilisateurs des autres systèmes de réplication, en l'occurrence le système 20b.

L'étage de reconstitution associative 22a a pour fonction de réunir des éléments formant un contexte dans lequel est pris un objet à copier mémorisé sur le disque 11a ou reçu d'un autre système de réplication 20b ou à transférer vers un autre système de réplication 20b. Cet étage procède à l'analyse de la page Web dans laquelle se trouve le lien vers l'objet considéré qu'il soit mémorisé sur le disque 11a ou reçu d'un autre système de réplication 20b. Les éléments de contexte jugés importants sont récupérés. Par exemple, on peut récupérer une page Web contenant un lien vers un fichier compressé (« .zip »), ce qui permet d'avoir une description textuelle de l'objet. Dans certains cas, sont récupérés des éléments correspondants à un niveau supérieur de l'arborescence hypertexte pour obtenir une description plus approfondie. Par exemple, on peut récupérer la page contenant un lien vers la page contenant un lien vers l'objet.

En variante, l'étage de reconstruction associative 22a détermine des éléments décrivant l'objet par une analyse de son contenu. Par exemple, l'étage de reconstruction associative 22a analyse l'objet et extrait de l'objet des mots clefs le caractérisant.

Ces éléments de contexte sont dans un mode particulier aussi transférés vers un autre système de réplication 20b lorsque l'objet est à transférer.

L'étage de génération de contenu 23a a pour fonction d'effectuer la copie dans le disque 31a des objets sélectionnés par l'étage 21a, objets mémorisés sur le disque 11a ou reçus d'un autre système de réplication 20b, et en parallèle, de générer une arborescence de pages Web 32a contenant des liens vers les objets copiés et décrivant ces derniers. L'arborescence de pages Web est présentée par exemple selon le formalisme de Dewey. Ce formalisme présente une structure hiérarchisée de thèmes en relation sémantique. Les pages qui correspondent à ces thèmes sont accessibles par des liens sur des pages qui correspondent à d'autres thèmes sémantiquement liés. Sont associés aux noeuds ou feuilles de l'arborescence des pages automatiquement générées contenant des liens vers les objets copiés et les pages Web formant les éléments contextuels récupérés sur le cache par l'étage 22a. Ainsi qu'il est décrit dans le document « Distributed Multimédia document Modeling » par Luigi Lancieri, dans « Proceedings of IEEE Joint Conference on Neural Networks », 1998, un réseau sémantique est utilisé pour mesurer la distance entre une page Web formant élément contextuel et chaque noeud de l'arborescence. La page Web avec son lien vers l'objet correspondant est placée au niveau du noeud de l'arborescence pour lequel la distance sémantique est la plus courte. A chaque fois qu'un objet est ajouté au serveur, les pages et les liens sont modifiés en conséquence. La génération de pages peut être faite de manière dynamique pour un accès statique ou à la demande par un programme de type CGI (pour Common Gateway Interface) ou tous types de formation de réponse dynamique. La copie des objets entre le disque 11a du cache 10a et le disque 31a du serveur 30a implique un traitement spécial sur le fichier de type MIME (pour Multipurpose Internet Mail Extension) correspondant et en particulier l'élimination de l'en-tête spécial généré par le cache.

Du point de vue d'un utilisateur, l'interface est semblable à ce qui existe sur un moteur de recherche ou un catalogue de type classique. Le contenu pourra également être accessible par mots clés. Le contenu visible par chaque utilisateur pourra être personnalisé par détection automatique du profil de chaque utilisateur, ainsi qu'il est décrit dans le document « Distributed Multimedia document Modeling » précité, par opération manuelle, chaque utilisateur donnant des mots clés caractéristiques de son profil, ou par une combinaison des deux méthodes.

Les étapes de copie et de stockage exécutées par les étages 21a, 22a et 23a sont effectuées à un rythme adapté à la durée de vie moyenne des objets dans le cache.

L'étage de gestion des contenus 24a a pour fonction de gérer la durée de vie des objets selon des modalités prédéterminées. D'une part, il détermine, par l'envoi de la requête HTTP correspondante, si un objet reste ou non présent sur le serveur d'origine. D'autre part, il mesure le nombre d'accès à l'objet en question. Ce nombre d'accès va servir de critère permettant de déterminer si l'objet doit être ou non éliminé du serveur Web 30a. Ce nombre d'accès va servir de critère permettant de déterminer si l'objet est considéré comme beaucoup accédé.

Dans le présent système, la taille disque est élevée comparée aux systèmes de l'art antérieur, ce qui donne aux objets stockés une durée de vie minimum de une à deux semaines. Un objet est éliminé au bout de ce laps de temps s'il conjugue plusieurs facteurs défavorables, par exemple s'il n'a jamais été accédé, s'il n'existe plus sur le serveur d'origine et s'il est éloigné des centres d'intérêt du site destinataire.

Par exemple et selon un mode particulier de l'invention, lorsque l'étage de gestion des contenus 24a détermine qu'un objet doit être éliminé ou est beaucoup accédé. Cet objet est considéré comme remarquable et celui-ci informe l'étage d'analyse d'opportunité 21a de cette détermination.

En effet, un objet devant être éliminé peut néanmoins être en rapport avec les centres d'intérêts des utilisateurs d'un autre dispositif. Il est donc judicieux de procéder à une analyse de celui-ci par l'étage d'analyse d'opportunité 21a avant d'effacer celui-ci.

De même, un objet considéré comme beaucoup accédé peut aussi être cohérent avec les centres d'intérêts d'autres dispositifs. Il convient donc aussi de procéder à une analyse de celui-ci par l'étage d'analyse d'opportunité 21a.

Le module de communication 26a assure les échanges de messages entre les différents systèmes de réplication autonomes 20 du réseau de télécommunication. Deux systèmes de réplication autonomes 20a et 20b seulement ont été représentés en Fig. unique par souci de clarté. Bien entendu, un nombre plus important de systèmes de réplication autonomes sont utilisés dans le réseau de télécommunication selon l'invention.

Le module de communication 26a obtient des informations représentatives des centres d'intérêts des autres dispositifs. Selon un mode préféré, le module de communication 26a interroge chaque système de réplication autonome du réseau de télécommunication et reçoit de chaque système de réplication autonome les centres d'intérêts déterminés par ceux-ci. Bien entendu, chaque système de réplication autonome du réseau de télécommunication peut aussi transférer périodiquement ces centres d'intérêts au module de communication 26a.

Le module de communication 26a transfère alors les centres d'intérêts des autres systèmes de réplication autonomes à l'étage d'analyse d'opportunité 21a. L'étage d'analyse d'opportunité 21a obtient un objet ou un ensemble d'objets, analyse alors la pertinence d'effectuer un transfert de celui-ci vers un des autres systèmes de réplication autonomes ayant communiqué ses centres d'intérêts.

L'étage d'analyse d'opportunité 21 obtient un objet ou un ensemble d'objets du disque 31 en lisant périodiquement le contenu du disque 31.

Dans un mode particulier, l'étage d'analyse d'opportunité 21 obtient un objet ou un ensemble d'objets du disque 31 suite à des requêtes des autres dispositifs.

Alternativement, l'étage d'analyse d'opportunité 21 obtient un objet ou un ensemble d'objets du disque 31 à partir d'évaluation de corrélation entre les centres d'intérêts des utilisateurs associés au dispositif et les centres d'intérêts des utilisateurs associés aux autres dispositifs.

Alternativement, l'étage d'analyse d'opportunité 21 obtient les objets considérés comme remarquables par l'étage de gestion des contenus 24a.

Si aucun centre d'intérêt parmi les centres d'intérêts reçus des autres systèmes de réplication autonomes ne correspond à l'objet considéré comme devant être effacé par l'étage de gestion des contenus 24a, l'étage d'analyse d'opportunité 21a transfère à l'étage de gestion des contenus 24a un message d'acceptation d'effacement de celui-ci. L'objet est ainsi effacé du disque de stockage 31a.

Si un ou plusieurs centres d'intérêts parmi les centres d'intérêts reçus des autres systèmes de réplication autonomes 20 correspondent à un objet obtenu, l'étage d'analyse d'opportunité 21a transfère au module de communication 26a une requête de transfert de cet objet vers chaque système de réplication autonome dont le ou les centres d'intérêts sont considérés comme cohérents avec l'objet. En variante, sont transférés en même temps que chaque objet des éléments formant un contexte dans lequel est pris l'objet.

A la réception de cet objet, voire des éléments formant le contexte dans lequel est pris l'objet, le module de communication 26 de chaque autre système de réplication autonome 20, par exemple le module de communication 26b du système de réplication autonome 20b transfère l'objet à l'étage d'analyse d'opportunité 21b qui analyse alors la pertinence de l'objet par rapport à ses centres d'intérêts. Si l'objet est cohérent avec un des centres d'intérêts, l'objet est alors mémorisé dans le disque de stockage 31b.

Il est à remarquer que les dispositifs 1 de traitement d'informations du réseau de télécommunication sont inclus préférentiellement dans une architecture distribuée, mais ils peuvent bien entendu être inclus dans une architecture centralisée ou hiérarchique.

Dans une architecture distribuée, chaque système de réplication autonome 20 effectue parallèlement les opérations précédemment décrites.

En variante, dans une architecture centralisée ou hiérarchique, un système de réplication autonome 20 communique les centres d'intérêts des systèmes de réplication autonome 20 qu'il supervise aux autres systèmes de réplication autonome 20. Dans cette même architecture centralisée ou hiérarchique, l'étage d'analyse d'opportunité 21 du système de réplication autonome 20 analyse alors la pertinence de l'objet reçu par rapport aux centres d'intérêts des systèmes de réplication autonome 20 qu'il supervise et communique l'objet aux systèmes de réplication autonome 20 dont le ou les centres d'intérêts sont cohérents avec celui-ci.

Dans une architecture hiérarchique, l'invention permet de traiter des centres d'intérêts d'une granularité très fine tout en évitant une surabondance des signaux échangés entre les différents dispositifs 1 et la nécessité de disposer de disques de stockage 31 de capacité importante pour les serveurs Web 30 des dispositifs 1.

En effet, si l'on considère l'exemple d'un groupe universitaire qui dispose d'un dispositif 1 appelé miroir actif autonome MAA selon l'invention, ce groupe universitaire comporte par exemple une école d'ingénieurs en électronique/informatique et une université de médecine. L'école d'ingénieurs et l'université de médecine disposent chacune d'un miroir actif autonome 1.

Les centres d'intérêts du MAA de l'école d'ingénieurs sont le traitement du signal en électronique, le codage du signal transmis sur des réseaux sans fil et le codage d'images numériques.

Les centres d'intérêts de l'université de médecine sont le traitement des maladies cardio-vasculaires.

Les centres d'intérêts des MAA sont décrits de façon précise au niveau des MAA de l'université et de l'école d'ingénieurs. Ceci permet aux étages d'analyse d'opportunité 21 des systèmes de réplication autonome 20 des MAA de déterminer de façon très précise la cohérence des objets avec les centres d'intérêts.

Le MAA du groupe universitaire mémorise les centres d'intérêts des MAA de l'université de médecine et de l'école d'ingénieurs avec une granularité supérieure. La granularité de ces centres d'intérêts est par exemple la granularité « technologie génie électrique » et la granularité « médicale ».

Prenons l'exemple d'une entreprise qui dispose d'un département recherche en codage du signal radio et un département recherche gestion de bases de données. L'entreprise, les départements de recherche disposent chacun d'un MAA selon l'invention.

Le centre d'intérêt du MAA du département recherche en codage du signal radio est « codage du signal », le centre d'intérêt du MAA du département recherche gestion de bases de données est par exemple « recherche de documents parmi un ensemble de documents ».

Le centre d'intérêt du MAA de l'entreprise de granularité moins fine est par exemple « technologies ».

Il est à remarquer que les centres d'intérêts sont une combinaison complexe de mots clefs et de pondérations. Les centres d'intérêts mentionnés dans cet exemple sont simplifiés par souci de clarté.

Selon notre exemple, un objet mémorisé dans le disque de stockage du MAA 1 du département de recherche en codage du signal radio est considéré par le gestionnaire de contenu 24 comme remarquable. Cet objet contient par exemple des informations sur le codage du signal. Il sera appelé par la suite objet codage du signal.

Conformément à l'invention, le MAA du département de recherche en codage du signal radio transfère ce document au MAA de l'entreprise. L'étage d'analyse d'opportunité du MAA de l'entreprise analyse alors la pertinence de cet objet par rapport au centre d'intérêt qui est « technologies ».

L'objet codage du signal est alors mémorisé dans le disque de stockage du MAA de l'entreprise.

L'objet codage, du signal est alors considéré comme remarquable par le gestionnaire de contenu 24 du MAA de l'entreprise.

Conformément à l'invention, le module de communication 26 du MAA de l'entreprise génère alors des requêtes à destinations d'autres MAA du réseau de télécommunication et obtient par exemple les centres d'intérêts du MAA du groupe université.

Ces centres d'intérêts sont « technologie génie électrique » et « médical ». L'étage d'analyse d'opportunité 21 du MAA de l'entreprise analyse la cohérence de l'objet codage du signal avec le centre d'intérêt « technologie génie électrique » et le centre d'intérêt «médical ».

L'objet codage du signal étant cohérent avec le centre d'intérêt « technologie génie électrique », celui-ci est transféré au MAA du groupe universitaire, pour être stocké dans le disque de stockage du MAA du groupe universitaire.

L'étage d'analyse d'opportunité 21 du MAA du groupe universitaire analyse la cohérence de l'objet codage du signal avec le centre d'intérêt « technologie génie électrique » et le centre d'intérêt «médical ».

L'objet codage du signal étant cohérent avec le centre d'intérêt du MAA de l'école d'ingénieurs, celui-ci est transféré au MAA de l'école d'ingénieurs.

Cet objet, par exemple demandé par un utilisateur du MAA de l'école d'ingénieurs lui est transféré par le MAA de l'école d'ingénieurs. Lorsque de nouveaux utilisateurs de l'école d'ingénieurs accéderont à cet objet, celui-ci sera délivré par le MAA de l'école d'ingénieurs et non par le MAA du groupe université. Les utilisateurs de l'université de médecine n'appelant pas à cet objet, le gestionnaire de contenu 24 du MAA du groupe universitaire pourra quant à lui effacer cet objet et éviter ainsi un nombre trop important de copies d'objets.

Il est à remarquer que l'étage d'analyse d'opportunité du MAA de l'école d'ingénieurs considère l'objet comme cohérent avec le centre d'intérêt codage du signal transmis sur les réseaux sans fil. Par contre, il ne considère pas cet objet comme cohérent avec les centres d'intérêts codage d'images numériques et traitement du signal en électronique.

Ainsi, grâce à l'invention, les objets, voire les informations de gestion de transactions, circulent entre les différents MAA et les objets grâce à l'invention et sont mémorisés dans le ou les MAA optimaux par rapport aux centres d'intérêts des MAA des utilisateurs.

Dans le cas d'une approche hiérarchique, la granularité des centres d'intérêts permet aux objets de circuler, et l'analyse de la cohérence de ceux-ci peut être effectuée en plusieurs étapes de plus en plus précises.

Selon un mode préféré, le système de réplication autonome 21a comporte un module de gestion des interactions homme machine 25a. Ce module 25a, à partir des fichiers Log 12a, identifie automatiquement les utilisateurs accédant aux objets mémorisés dans le disque de stockage 31a et connaissant la cohérence des objets avec les centres d'intérêts établis des communautés d'utilisateurs accédant aux mêmes ressources ou ayant un comportement similaire de façon dynamique.

Par exemple, dans l'exemple précédent du MAA de l'école d'ingénieurs, trois communautés sont identifiées, la communauté codage d'images, la communauté traitement du signal en électronique et la communauté codage du signal transmis sur les réseaux sans fil. Un utilisateur peut bien entendu faire partie d'une ou de plusieurs communautés.

A partir de ces communautés déterminées, le module de gestion des interactions homme machine 25a génère, par l'intermédiaire du module de communication 26a, des messages à destination des membres d'une communauté leur signifiant l'existence de cette communauté et leur appartenance à celle-ci. Le module de gestion des interactions homme machine 25a communique aussi à chaque membre de cette communauté les adresses ou noms des membres de la communauté dont ils font partie. Ces messages sont par exemple effectués sous forme de courrier électronique.

Ceci est particulièrement intéressant en ce sens que les communautés évoluent souvent de manière dynamique. Un sujet particulièrement d'actualité est susceptible d'intéresser différents utilisateurs. Par exemple, l'émergence d'un nouveau standard de télécommunication peut susciter l'intérêt de membres des communautés traitement du signal en électronique et codage du signal transmis sur les réseaux sans fil. Un nouveau centre d'intérêt est alors créé, le module de gestion des interactions homme machine 25a détermine alors une nouvelle communauté, notifie aux membres de cette communauté la liste des membres de cette communauté et permet ainsi à ces membres de se connaître les uns les autres et ainsi de pouvoir s'échanger entre eux des informations.

Les informations déterminées par le module de gestion des interactions homme machine 25a permettent ainsi de visualiser la formation et l'évolution des communautés. Ceci est particulièrement intéressant pour un administrateur, d'une entreprise par exemple. Il peut identifier des intérêts communs parmi l'ensemble des membres de l'entreprise, identifier des compétences, regrouper ces compétences autour d'un domaine technique pour former des équipes de développement autour de ce domaine de compétences.

Bien entendu, la présente invention n'est nullement limitée aux modes de réalisation décrits ici, mais englobe, bien au contraire, toute variante à la portée de l'homme du métier.

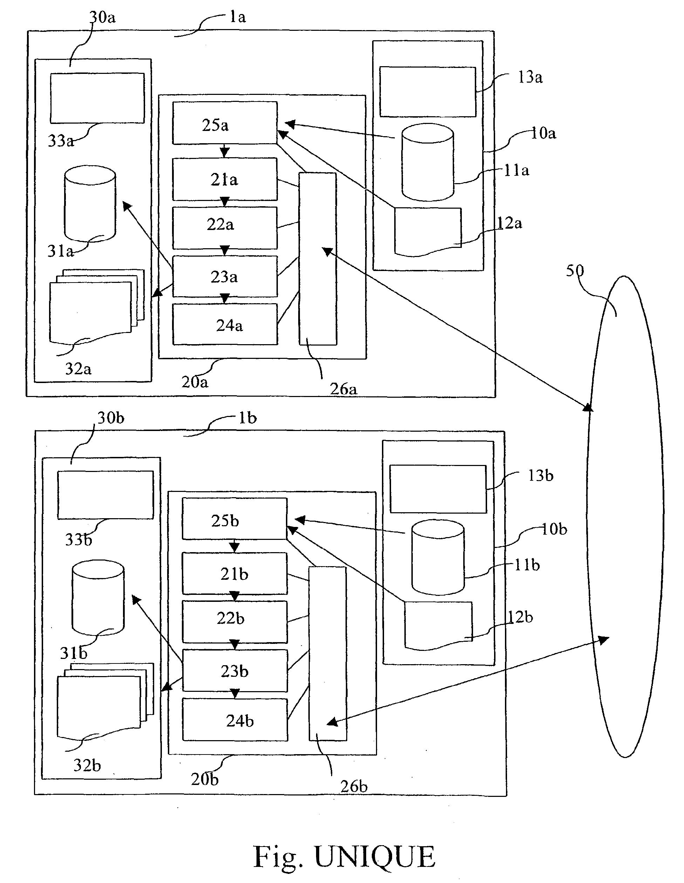

## Revendications

1. Procédé de traitement d'informations dans un système de télécommunication comportant un dispositif comportant des centres d'intérêts des utilisateurs qui lui sont associés, le dispositif mémorisant de l'information constitutive d'objets en rapport avec les centres d'intérêts des utilisateurs qui lui sont associés et antérieurement reçus par un utilisateur qui lui est associé, **caractérisé en ce que** le système de télécommunication comporte au moins un autre dispositif comportant des centres d'intérêts des utilisateurs qui lui sont associés, l'autre dispositif mémorisant de l'information constitutive d'objets en rapport avec les centres d'intérêts des utilisateurs qui lui sont associés et antérieurement reçus par un utilisateur qui lui est associé et **en ce que** des objets susceptibles d'être en rapport avec les centres d'intérêts de l'autre dispositif sont transférés entre les dispositifs.

2. Procédé de traitement d'informations selon la revendication 1, **caractérisé en ce que** préalablement au transfert des objets, le procédé comporte les étapes :
- d'obtention d'informations représentatives des centres d'intérêts d'au moins un autre dispositif,
- de détermination, parmi les objets mémorisés dans le dispositif, d'objets susceptibles d'être en rapport avec les centres d'intérêts d'au moins un autre dispositif.

3. Procédé de traitement d'informations selon l'une quelconque des revendications 1 à 2, **caractérisé en ce que** si les objets transférés sont en rapport avec un centre d'intérêt de l'autre dispositif, l'autre dispositif mémorise les informations transférées.

4. Procédé de traitement d'informations selon l'une quelconque des revendications 1 à 3, **caractérisé en ce que** le procédé comporte en outre les étapes de détermination de centres d'intérêts et de notification entre autres d'informations représentatives des centres d'intérêts déterminés aux utilisateurs du dispositif.

5. Procédé de traitement d'informations selon la revendication 4, **caractérisé en ce que** le procédé notifie à au moins un utilisateur des informations sur les autres utilisateurs ayant un centre d'intérêt commun avec ledit utilisateur.

6. Procédé de traitement d'informations selon l'une quelconque des revendications 1 à 5, **caractérisé en ce que** les objets mémorisés sont des objets qui ont une taille supérieure à une taille prédéterminée et/ou qui sont facilement réutilisables en l'état.

7. Procédé selon l'une quelconque des revendications 1 à 6, **caractérisé en ce que** le procédé transfère en même temps que chaque objet des éléments formant un contexte dans lequel est pris ledit objet et/ou des éléments décrivant l'objet par une analyse de son contenu.

8. Procédé de traitement d'informations selon l'une quelconque des revendications 1 à 7, **caractérisé en ce que** le procédé comporte une étape de gestion des contenus mémorisés pour déterminer des objets remarquables et les objets remarquables susceptibles d'être en rapport avec les centres d'intérêts d'au moins un autre dispositif sont transférés.

9. Dispositif pour exécuter un procédé de traitement d'informations antérieurement reçues par un utilisateur au sein du réseau Internet selon l'une quelconque des revendications précédentes, ledit dispositif (1) étant **caractérisé en ce qu'**il comprend un dispositif de médiation et de mémorisation (10), un serveur Web (30) et un système de réplication autonome (20) comprenant un étage d'analyse d'opportunité (21), un étage de reconstitution associative (22), un étage de génération de contenu (23) un étage de gestion du contenu (24), un module de communication (26) et un module de gestion des interactions homme machine (25).

10. Dispositif de réplication autonome (20) destiné à être associé à un dispositif de médiation et de mémorisation (10) et un serveur Web (30) pour exécuter un procédé de traitement d'informations antérieurement reçues par au moins un utilisateur au sein du réseau Internet selon l'une quelconque des revendications 1 à 8, ledit dispositif (20) étant **caractérisé en ce qu'**il comprend un étage d'analyse d'opportunité (21), un étage de reconstitution associative (22), un étage de génération de contenu (23), un étage de gestion de contenu (24), un module de communication (26) et un module de gestion des interactions homme machine (25).

11. Programme d'ordinateur stocké sur un support d'informations, ledit programme comportant des instructions permettant de mettre en oeuvre le procédé de traitement selon l'une quelconque des revendications 1 à 8, lorsqu'il est chargé et exécuté par un système informatique.
